# EUROPÄISCHE PATENTSCHRIFT

(11) **EP 2 157 069 B1**
(45) Veröffentlichungstag und Bekanntmachung des Hinweises auf die Patenterteilung: **04.11.2015**
(21) Anmeldenummer: 08162747.3
(22) Anmeldetag: 21.08.2008
(51) Int. Cl.: C04B 40/06, C04B 20/10

(54) **BESCHICHTETE HYDRAULISCHE BINDEMITTEL**
COATED HYDRAULIC BONDING AGENT
LIANT HYDRAULIQUE REVÊTU

(43) Veröffentlichungstag der Anmeldung: 24.02.2010
(73) Patentinhaber: Hoffmann Mineral GmbH & Co. KG, 86633 Neuburg a.d. Donau (DE)
(72) Erfinder: Risch, Alexander, Dr., 85098 Großmehring (DE); Lössl, Helmut, 85051 Ingolstadt (DE); Bayer,Hermine, 86633 Neuburg/Donau (DE)
(74) Vertreter: Hoffmann Eitle

(56) Entgegenhaltungen:
- EP-A- 0 846 089
- EP-A- 0 922 683
- EP-A- 1 120 384
- EP-A- 1 403 227
- EP-A- 1 710 064
- CH-A- 487 085
- GB-A- 1 075 459
- US-A- 4 909 848
- US-A- 5 098 612
- US-A- 5 725 906
- US-A1- 2004 187 741

## Beschreibung

Die Erfindung betrifft beschichtete hydraulische Bindemittel, die bei Kontakt mit Wasser eine bestimmte Zeitspanne hydraulisch inaktiv bleiben und somit eine einstellbare Lagerstabilität als wässrige Suspension erreichen, ohne dass eine Hydratationsreaktion erfolgt. Weiterhin betrifft die Erfindung Zweikomponentensysteme, die das beschichtete hydraulische Bindemittel und einen Aktivator umfassen.

### Technischer Hintergrund

Hydraulische Bindemittel sind meist mineralische Stoffe, die unter Wasseraufnahme erhärten und nach dem Erhärten wasserbeständig sind. Beispiele für hydraulische Bindemittel sind einerseits zementäre Systeme, wie zum Beispiel Portlandzement mit seinen Hauptbestandteilen C₂S, C₃S, C₃A und C₄AF und Tonerdezement mit CA, CA₂ und C₁₂A₇ als wesentliche Bestandteile. Die Abkürzungen C, S, A und F geben dabei gemäß der in der Baustoffchemie üblichen Notation die Bestandteile auf Basis der Oxide CaO, SiO₂, Al₂O₃ und Fe₂O₃ an. Weitere Beispiele für hydraulische Bindemittel sind Branntgipse und Anhydritbinder (CaSO₄ * 1/2 H₂O und CaSO₄).

Zur weiteren Verarbeitung werden die hydraulischen Bindemittel mit einem Füllstoff, Wasser und je nach Formulierungsphilosophie mit einer unbestimmten Anzahl von Additiven vermischt. Hydraulische Bindemittel bilden die Basis für eine Vielzahl von Werkstoffen, wie z.B. Beton, spachtelbare Reparaturmörtel, gießfähige Mörtel, Kleber oder Fließestriche.

Es ist bekannt, dass der zeitliche Verlauf der hydraulischen Reaktion, im speziellen der Erstarrungsverlauf des Bindemittels, für solche Anwendungen meist zu schnell oder zu langsam erfolgt, und daher durch zugegebene Additive gesteuert wird. Diese Steuerung erfolgt nach Stand der Technik durch eine Kombination von Abbindeverzögerern und Abbindebeschleunigern, die individuell auf die Art des Bindemittels abgestimmt sind. Weitere gängig eingesetzte Zusatzstoffe in hydraulischen Massen sind Verflüssiger, Dichtungsmittel, Wasserretentionsmittel, Porenbildner und Plastifizierungsmittel wie z.B. Kunstharzdispersionen.

Die zementären Systeme auf Basis von Portland- oder Tonerdezement können in der Regel durch verschiedenste Natrium- und Calciumsalze beschleunigt werden, als Abbindeverzögerer wirken Citrate, Phtalate, Sulfonsäuren, Ligninsulfonate und Salicylate. Bei Sulfatbindern wie Anhydrit oder Halbhydrat werden als Beschleuniger allgemein feingemahlener Gips, Natriumchlorid, Calciumsulfat oder Kaliumhydroxid verwendet. Verzögernd wirken bei diesem hydraulischen Bindemittel Eiweißprodukte, Melasse, Leime, Zitronen-, Essig- und Milchsäure und Natriumphosphat.

Letztendlich haben diese Additive die Wirkung einer Beschleunigung oder Verlangsamung der ab dem Zeitpunkt der Wasserzugabe eintretenden hydraulischen Reaktion. Dies bewirkt eine Verkürzung bzw. Verlängerung des Zeitraumes zwischen Erstarrungsbeginn und -ende.

Die Zugabe der Additive, d.h. der Beschleuniger oder Verzögerer, darf dabei nur in geringen Mengen erfolgen, da bei größeren Zusätzen zunehmend Schäden, Festigkeitsabfall und ähnliche Probleme in der ausgehärteten Masse auftreten können.

Ein Nachteil ist weiterhin die Abhängigkeit des Erstarrungsvorgangs vom Zeitpunkt des Anmachens des hydraulischen Bindemittels mit Wasser. Sobald Wasser hinzugegeben worden ist, beginnt die hydraulische Reaktion. Die Additive können zwar die Kinetik der Reaktion beeinflussen und damit den Erstarrungsverlauf beschleunigen oder verzögern, wodurch auch das Erstarrungsende verschoben wird. Es ist jedoch über diese Abbinderegler nicht möglich, "Ready to use"-Produkte auf Basis vorbereiteter wässriger Suspensionen hydraulischer Bindemittel, die ein Anrühren mit einer definierten Menge Wasser überflüssig machen, und bei denen das Abbinden beispielsweise durch Zugabe einer Aktivator-Komponente eingeleitet werden kann, zu realisieren.

Im Stand der Technik sind Additive bekannt, die bei der Herstellung von Mörtel-, Gips- oder Zementmassen zugegeben werden, um deren Wasseraufnahme nach dem Erstarren zu reduzieren. Dabei ist es das Ziel, die Massen im bereits hydratisierten Zustand vor einer Schädigung durch Wasseraufnahme zu schützen.

So beschreiben EP 0846089 und DE 196 33 131 einen Gips, der mit 0.1 bis 30 % eines fettchemischen Additivs hydrophob gemacht wurde, so dass dieser auch im Außenbereich, beispielsweise als Putz eingesetzt werden kann. Dieser Gips kann gemäß DE 196 33 131 hergestellt werden, indem man Anhydrit oder Halbhydrat mit Wasser versetzt, das das fettchemische Additiv enthält.

DE 10 10 9995 beschreibt die Hydrophobierung hydraulisch abgebundener Massen, beispielsweise auf Basis von Portland-Zement, mit organischen Aminen. Diese werden gemäß DE 10 10 9995 dem aus dem Zement hergestellten Mörtel zugesetzt, um eine verringerte Wasseraufnahme des erstarrten Produkts zu erreichen.

Weiterhin ist im Stand der Technik bekannt, hydraulische Bindemittel zu hydrophobieren.

So ist in CA 2272408 das hydrophobe Coaten mineralischen Materials beschrieben, das gemäß der allgemeinen Lehre auch ein hydraulisches Bindemittel sein kann. Das beschichtete Material kann dann als Festigkeit verleihendes Additiv zu einer Mörtelmischung mit beispielsweise Portland-Zement als hydraulischem Bindemittel zugegeben werden und nimmt an der Erstarrungsreaktion teil. Insbesondere wird die Beschichtung von Wollastonit mit Polyethlyenglycol oder Polypropylenglycol beschrieben, der vor allem die Biegefestigkeit der abgebundenen Masse erhöht.

Gemäß US 2,996,394 wird das Ziel verfolgt, dem hydraulischen Bindemittel einen Schutz gegen Luftfeuchte zu verleihen. Es wird ein Portlandzement beschrieben, der mit einer Konzentration von bis zu 0,4 % an Ölsäure und einer Phosphorverbindung versetzt wird, um als Pulver eine lange Lagerstabilität gegenüber hohen Luftfeuchten zu erreichen. Eine Stabilität in Wasser selbst, z.B. als Suspension, wird hierbei jedoch für das behandelte hydraulische Bindemittel nicht erreicht.

Des Weiteren werden in WO 2004/087606 polymerbeschichtete hydraulische Bindemittel beschrieben, von denen es heißt, dass die hydraulische Reaktion erst nach einer gewissen Latenzzeit beginnt. So wird dort ein mit 60 Gew.% (in Bezug auf das Gewicht des Bindemittels) beschichteter Weißzement beschrieben, der bei Kontakt mit Wasser erst nach über 40 Minuten reagiert. Bei Zusatz von Borax lässt sich dieses Zeitintervall auf 10 Minuten verkürzen. Ebenso werden dort mit etwa 50 oder mehr Gew.% eines fluorhaltigen Silans behandelte Zemente beschrieben, die erst nach einer Zeitspanne von über 10 Minuten mit Wasser reagieren. Nachteile eines derart behandelten hydraulischen Bindemittels sind die große Menge des erforderlichen Beschichtungsmittels sowie die begrenzte Stabilitätsdauer von weniger als 60 Minuten.

EP 922 683 betrifft ein Spritzbindemittel und dessen Verwendung zur Herstellung eines Spritzbetons oder Spritzmörtels mit verbesserter Verarbeitbarkeit, insbesondere hinsichtlich der Regulierung von Hydratationsbeginn und Erhärtung. Dabei wird das Bindemittel hydrophobiert und anschließend mit alkalifreiem Beschleuniger behandelt. Als Hydrophobierungsmittel werden Stearin- und Ölsäure (Fettsäuren), Wachs, Salze der Fettsäuren (Natrium-, Calcium-, Ammonium-, Aluminium- und Zinkstearat), Harze und Natriumoleate, Kalkseifen und Mineralölemulsionen und auch Silane, Siloxane und Silikonöle genannt. Von einem derartigen Spritzbeton heißt es, dass er über die Misch- und Transportzeiten hinaus über mehrere Stunden oder sogar Tage seine Reaktivität behält, so dass dieser Spritzbeton auf Halde oder in Silos an der Einbaustelle vorgehalten werden kann, ohne wesentlich zu reagieren.

CH487085 betrifft ein Verfahren zur Erhöhung der Lagerfähigkeit von Zement durch den Zusatz eines sich mit dem Zement vereinigenden carboxylgruppenfreien Hydrophobierungsmittels mit einem langen hydrophoben Rest und einer funktionellen Gruppe, wie beispielsweise Stearylamin. Das Hydrophobierungsmittel kann bei der Herstellung des Zements, also beim Vermahlen der Klinker, diesem zugesetzt werden. Alternativ kann es auch nach der Fertigstellung des Zements auf irgendeine Weise im Zement feinst verteilt werden.

GB 1, 075, 459 beschreibt trockene, zementhaltige Verbindungen, bei denen die Zementteilchen mit einer langkettigen Fettsäure oder einem Metallsalz hiervon beschichtet sind und/oder mit einem trockenen, pulverförmigen, wasserlöslichem, organischem Polymerbinder vermengt werden, und die bis zu 5 Gewichtsprozent, gezogen auf den Zement, eines organischen Brückenlösungsmittels beinhalten.

US 4,909,848 beschäftigt sich mit der Aufgabe, ein Vergußmittel bereitzustellen, das eine bessere Eindringfähigkeit als üblicher, ultrafeinteiliger Zement aufweist, und das in der Lage ist, einen hohen Wasserbarriereeffekt zu erreichen. Zur Lösung dieser Aufgabe weisen die Zementteilchen einen mittleren Durchmesser von nicht mehr als 10µm auf, und sie tragen eine Beschichtung mit einem wasserlöslichen Silikonharz und einem oberflächenaktiven Mittel. Durch die Beschichtung sollen die Teilchen sehr glatt werden, um gut in Ritzen eindringen zu können, und gleichzeitig sind sie hydrophil, um bei Kontakt mit Wasser agglomerieren zu können.

US 5, 098, 612 betrifft ein Verfahren zur Stabilisierung giftiger oder radioaktiver Flüssigkeiten, wobei diese Flüssigkeiten mit einem Tonmineral und silikonbeschichteten Zementpartikeln umgesetzt werden. Als Silikon wird beispielsweise Polydimethylsiloxan eingesetzt.

### Aufgabenstellung

Der vorliegenden Erfindung liegt aufgrund der vorstehend beschriebenen Problematik die Aufgabe zugrunde, speziell beschichtete hydraulische Bindemittel bereitzustellen, die nicht nur gegenüber Wasser für eine bestimmte Zeitspanne inert sind, so dass beispielsweise eine wässrige Suspension für einen längeren, einstellbaren Zeitraum stabil ist und keine hydraulische Reaktion zeigt, sondern die auch nur eine geringe Menge an Beschichtungsmittel erforderlich machen. Insbesondere für den Fall einer langen Stabilitätsdauer soll außerdem zusätzlich ein Aktivator bereitgestellt werden, dessen Zugabe die Stabilitätsdauer beendet und die hydraulische Reaktion auslöst.

### Offenbarung der Erfindung

Erfindungsgemäß wird diese Aufgabe durch ein mit einer gleichmäßigen und vollständigen Beschichtung versehenes hydraulisches Bindemittel ausgewählt aus Zement wie z.B. Portland-Zement oder Tonerde-Zement und Calciumsulfat-Bindemitteln gelöst, das durch Aufbringen eines Beschichtungsmittels, das eine oder mehrere Verbindungen aus der Gruppe (A-1) bis (A-9) umfasst, auf ein hydraulisches Bindemittel erhältlich ist, wobei das hydraulische Bindemittel in Pulverform im Mischaggregat vorgelegt wird und das Beschichtungsmittel im flüssigen Zustand bei einer Temperatur zwischen Raumtemperatur und 160°C aufgedüst wird, wobei die Wahl der Temperatur von den verwendeten Verbindungen abhängt.

Die Erfindung betrifft weiterhin wässrige Suspensionen dieses beschichteten hydraulischen Bindemittels.

Außerdem stellt die Erfindung ein Zweikomponentensystem mit dem beschichteten hydraulischen Bindemittel oder dessen wässriger Suspension als Komponente (I) und einem Aktivator als Komponente (II) zur Verfügung, wobei die hydraulische Reaktion des Bindemittels durch Vereinigung dieser Komponenten ausgelöst werden kann. Dabei findet man, dass die Hydratation dann nach Aktivatorzugabe genauso abläuft wie beim unbeschichteten Bindemittel, wobei jedoch zwischen dem Zeitpunkt der Aktivatorzugabe und dem Start der Hydratation eine gewisse Latenzzeit bestehen kann.

Die erfindungsgemäß beschichteten hydraulischen Bindemittel sind in Wasser über eine bestimmte Zeitspanne inert, so dass beispielsweise wässrige Suspensionen hergestellt werden können, die dann auch für eine gewisse Zeitspanne stabil sind. Diese Zeitspanne vom Ansetzen der Suspension bis zum Eintreten der hydraulischen Reaktion wird im Folgenden als Stabilitätsdauer bezeichnet und hängt im Wesentlichen vom Bindemittel und der Beschichtung ab. In Abhängigkeit hiervon kann sie bis zu mehrere Stunden, Tage oder Jahre betragen.

Nach Ablauf der von der Art der Beschichtung und des Bindemittels abhängigen Stabilitätsdauer hydratisiert die Suspension, was auf die allmähliche Bildung von Störstellen in der Beschichtung zurückgeführt wird, beispielsweise durch Abdiffundieren von Beschichtungsmolekülen. Die Hydratation läuft nach Ablauf der Stabilitätsdauer im Wesentlichen genauso schnell ab wie beim unbeschichteten Bindemittel, und die resultierenden Festigkeitswerte unterscheiden sich ebenfalls nicht wesentlich.

Durch geeignete Kombinationen von Bindemittel und Beschichtungsmittel lassen sich somit erfindungsgemäß wässrige Suspensionen erzeugen, bei denen die Hydratationsreaktion nach einem einstellbaren Zeitintervall eintritt. Ebenso lassen sich wässrige Suspensionen mit sehr langer Stabilitätsdauer herstellen, die bevorzugt für Zweikomponentensysteme einsetzbar sind, da das Abbinden durch Aktivatorzugabe jederzeit initiierbar ist.

### Hydraulisches Bindemittel

Erfindungsgemäß wird als hydraulisches Bindemittel ein zementäres System oder ein Bindemittel auf Calciumsulfatbasis eingesetzt. Als Beispiele für ein zementäres System lassen sich insbesondere Portlandzement mit seinen Hauptbestandteilen C2S, C3S, C3A und C4AF oder Tonerdezement mit CA, CA2 und C12A7 als wesentliche Bestandteile anführen. Beispiele für Bindemittel auf Calciumsulfatbasis sind Branntgipse wie Halbhydrat oder Anhydrit.

Um eine möglichst gleichmäßige und vollständige erfindungsgemäße Beschichtung zu erreichen, liegt das Bindemittel bevorzugt in Pulverform vor.

### Beschichtungsmittel

Das erfindungsgemäße beschichtete hydraulische Bindemittel ist erhältlich durch Aufbringen eines Beschichtungsmittels, das eine oder mehrere Verbindungen aus der Gruppe (A-1) bis (A-9) umfasst, auf das hydraulische Bindemittel. Zusätzlich kann das Beschichtungsmittel auch eine oder mehrere Verbindungen aus der Gruppe (B-1) bis (B-5) umfassen.

Falls das Beschichtungsmittel mehrere Verbindungen aus der Gruppe (A-1) bis (A-9) sowie gegebenenfalls (B-1) bis (B-5) umfasst, so können diese einzeln in mehreren Schritten und/oder in Mischung miteinander aufgetragen werden.

Die Gruppe der Verbindungen (A-1) bis (A-9) lässt sich untergliedern in Amine oder Ammoniumsalze ((A-1), (A-2) und (A-3)), Verbindungen auf Fettsäurebasis ((A-4) und (A-5)) sowie Verbindungen auf Silan-Basis oder Titanatbasis ((A-6), (A-7), (A-8) und A-9). Diese Verbindungen können dabei in Substanz oder auch in einem Lösungsmittel, wie z.B. einem Alkan, gelöst eingesetzt werden, was beispielsweise bei Silanen (A-6) und Titanaten (A-9) gebräuchlich ist.

Die vom Beschichtungsmittel umfassten Verbindungen (A-1) bis (A-9) werden typischerweise in einem Gewichtsanteil von insgesamt mindestens 0.1 % in Bezug auf das Bindemittel aufgetragen, bevorzugterweise 0.15 bis 12% und insbesondere 0,2 bis 6 %. Dabei kann der am stärksten bevorzugte Bereich abhängig von der Verbindung variieren, wie unten ausgeführt.

Die Amine oder Ammoniumsalze (A-1), (A-2) und (A-3) sowie die Verbindungen auf Fettsäurebasis (A-4) und (A-5) eignen sich für jedes hydraulische Bindemittelsystem gleichermaßen gut.

Die Silane (A-6), (A-7) und (A-8) und Titanate (A-9) können mit den Hydroxylgruppen der Silikat- oder Aluminiumoxidoberflächen chemische Bindungen eingehen und eignen sich daher insbesondere für Zemente wie Portland-Zement oder Tonerde-Zement. Falls im Beschichtungsmittel dabei noch weitere Verbindungen (z.B. aus (A-1) bis (A-5) und/oder (B-1) bis (B-5)) zum Einsatz kommen sollen, werden die silan- oder titanathaltigen Beschichtungsmittel bevorzugt als erstes aufgetragen. Für silikat-/aluminatfreie Bindemittel wie Branntgipse sind die Silane oder Titanate weniger stark bevorzugt.

Im Folgenden werden die Verbindungen (A-1) bis (A-9) sowie (B-1) bis (B-5) nun im Detail beschrieben.

### Amine und Ammoniumsalze (A-1) bis (A-3)

(A-1) steht für Amine

   NR¹R²R³

   wobei R¹ eine C₆₋₄₀-Kohlenwasserstoffgruppe ist und R² und R³ unabhängig voneinander Wasserstoff oder eine C₁₋₄₀-Kohlenwasserstoffgruppe sind, und/oder deren Salze.

Bevorzugterweise werden die Verbindungen (A-1) in einem Anteil von 0.5 bis 2% in Bezug auf das Gewicht des Bindemittels eingesetzt, wobei sich die Prozentangaben auf das jeweilige Amin beziehen.

R¹ steht dabei insbesondere für gesättigte oder ungesättigte, lineare oder verzweigte aliphatische Kohlenwasserstoffgruppen. Bevorzugt sind geradkettige Alkylgruppen mit 8-22, insbesondere 10-18 Kohlenstoffatomen, wie Decyl, Dodecyl (Lauryl), Tetradecyl (Myristyl), Hexadecyl oder Octadecyl (Stearyl). R¹ kann insbesondere auch für eine Mischung solcher Gruppen stehen, wie sie beispielsweise aus den Fettsäuregemischen natürlicher Fette und Öle erhältlich sind.

R² und R³ können beispielsweise vom gleichen Typ wie R¹ sein oder auch für C₁₋₅-Alkylgruppen wie Methyl oder Ethyl, oder für Wasserstoff stehen.

Somit lassen sich als Beispiele für (A-1) primäre Fettamine wie Kokosfettamin, Talgamin, hydriertes Talgamin, Stearylamin, Rübölamin oder Oleylamin und deren sekundäre und tertiäre C₁₋₅-Alkylderivate anführen, oder sekundäre Fettamine wie z.B. Distearylamin und deren tertiäre C₁₋₅-Alkylderivate, oder auch tertiäre Fettamine. Bevorzugt sind primäre Fettamine.
(A-2) steht für Polyamine des Typs R¹-[NH-CH₂-CH₂-CH₂]ₙ-NH₂ mit n=1-5 und/oder deren Salze, wobei R¹ für die gleichen Gruppen steht wie bei (A-1). Bevorzugterweise werden die Verbindungen (A-2) in einem Anteil von 0.5 bis 2% in Bezug auf das Gewicht des Bindemittels eingesetzt, wobei sich die Prozentangaben auf das jeweilige Polyamin beziehen.

Als Beispiele für Polyamine lassen sich z.B. Laurylpropylendiamin, Talgfettpropylendiamin, Talgfettdipropylentriamin oder Oleyltripropylentetramin anführen.

Erfindungsgemäß lässt sich als (A-1) oder (A-2) auch ein Salz des jeweiligen Amins einsetzen, oder eine Mischung aus Amin und Salz. Beim Salz kann es sich beispielsweise um ein Mineralsäuresalz wie Chlorid, Bromid oder (Hydrogen-) Sulfat handeln, oder auch um das Salz einer organischen Säure, beispielsweise um ein Carbonsäuresalz (z.B. Acetat oder ein Fettsäuresalz), ein Sulfonat (z.B. Tosylat oder ein Alkylsulfonat) oder ein Phosphonat (z.B. ein Alkylphosphonat). Bevorzugt sind Carbonsäuresalze, und insbesondere Fettsäuresalze wie Palmitat, Stearat oder Oleat.

Zweckmäßigerweise lassen sich die Salze durch Mischen des Amins mit der Säure herstellen, wobei im Fall eines Aminüberschusses eine Mischung aus Amin und Salz entsteht. Bevorzugt sind dabei Mischungen aus dem Amin und einer Fettsäure, wie z.B. Ölsäure, in einem Verhältnis zwischen 1:3 und 3:1.
(A-3) steht für quaternäre Ammoniumsalze [NR¹R²R³R⁴⁺]ₙXⁿ⁻ wobei die Definition von R¹, R² und R³ die gleiche ist wie in (A-1) und R⁴ eine C₁₋₆-Alkylgruppe wie z.B. Methyl oder Ethyl darstellt. Xⁿ⁻ symbolisiert ein Anion mit der Wertigkeit n (typischerweise 1 oder 2) wie z.B. einen Mineralsäurerest oder organischen Säurerest, wie oben für (A-1) und (A-2) ausgeführt. Zweckmäßigerweise sind die quaternären Ammoniumsalze (A-3) durch Alkylierung der Amine (A-1), z.B. mit einem C₁₋₆-Alkylhalogenid, erhältlich. Die quaternären Ammoniumsalze werden bevorzugt in einem Anteil von 0,5 bis 2% in Bezug auf das Gewicht des Bindemittels eingesetzt.

Beispiele für (A-3) sind Alkyltrimethylammoniumhalogenide wie z. B. Lauryltrimethylammoniumchlorid oder Stearyltrimethylammoniumchlorid, oder auch Dialkyldimethylammoniumhalogenide wie Ditalgfettalkyl-Dimethylammoniumchlorid.

### Verbindungen auf Fettsäurebasis (A-4) und (A-5)

(A-4) repräsentiert Fettsäuresalze mehrwertiger Metallionen, beispielsweise Ca-, Al-, Mg- oder Zinksalze der Stearinsäure, Ölsäure oder Palmitinsäure. Bevorzugt ist Zinkoleat. Die Fettsäuresalze werden dabei bevorzugt in einem größeren Gewichtsanteil von 3-8 Gew. % in Bezug auf das Bindemittel eingesetzt.
(A-5) steht für Fettsäuremischungen, die mindestens eine gesättigte und eine ungesättigte Fettsäure und/oder deren Salze enthalten. Als Beispiele lassen sich Mischungen aus Ölsäure und Stearinsäure oder aus Ölsäure und Zinkstearat anführen.

Der Gewichtsanteil der ungesättigten Fettsäure in Bezug auf das Bindemittel ist dabei bevorzugt 1-3 Gew.%, der der gesättigten Fettsäure bevorzugt 2-5 Gew.%.

### Verbindungen auf Silans oder Titanbasis (A-6), (A-7), (A-8) und (A-9)

(A-6) bezeichnet Silane des Typs (R⁵O)₃Si-R⁶, wobei R⁵ eine C₁₋₆-Alkylgruppe und R⁶ eine C₄₋₃₀-Kohlenwasserstoffgruppe oder eine Gruppe der Formel -(CH₂)ₙ-Y mit n=0-3 ist, worin Y für eine Methacrylgruppe oder eine Vinylgruppe steht. Die Silane (A-6) werden bevorzugt in einem Gewichtsanteil von etwa 0,15 bis 5 Gew.% eingesetzt, jeweils in Bezug auf das Gewicht des Bindemittels.

Als Beispiele für die C₁₋₆-Alkylgruppe lassen sich wiederum Methyl und Ethyl anführen, wobei üblicherweise Methyl verwendet wird. Als Beispiele für die C₄₋₃₀-Kohlenwasserstoffgruppe sind verzweigte oder geradkettige Alkyl- oder Alkenylgruppen zu nennen, wobei gesättigte und geradkettige Gruppen bevorzugt sind, insbesondere mit Kettenlängen von 8 bis 16 Kohlenstoffatomen.

Typische Vertreter sind somit n-Alkyltrimethoxysilane wie Octyltrimethoxysilan, Dodecyltrimethoxysilan oder Hexadecyltrimethoxysilan. Es können auch Mischungen solcher Silane unterschiedlicher Kettenlänge eingesetzt werden, beispielsweise Octyltrimethoxysilan und Hexadecyltrimethoxysilan, wobei das Mischungsverhältnis z.B. zwischen 1:3 und 3:1 liegen kann.

Im Gegensatz zu den vorher genannten Verbindungen, von denen man annimmt, dass sie physikalisch bzw. durch ionische Wechselwirkung an das Bindemittel binden, können die Silane des Typs (A-6) mit den Hydroxylgruppen der Silikat- oder Aluminiumoxidoberflächen unter Abspaltung der Alkoxygruppen chemische Bindungen eingehen. Daher eignen sie sich insbesondere zur erfindungsgemäßen Beschichtung von Zementen wie Portland-Zement oder Tonerde-Zement. Falls das Silan polymerisierbare Gruppen wie Vinyl- oder Methacryl enthält, so liegen diese nach der Beschichtung weitgehend in polymerer Form vor. Ein solches Silan kann auch in oligomerer Form eingesetzt werden.

Weiterhin sind auch (A-7) Silazane des Typs R⁷₃Si-NH-SiR⁷₃, wobei R⁷ eine C₁₋₆-Alkylgruppe ist, einsetzbar. Als Beispiele für die Alkylgruppe sind wiederum Methyl oder Ethyl zu nennen. Ähnlich wie die Silane (A-6) können die Silazane (A-7) chemisch an Silikatoberflächen binden, wobei im Fall der Silazane Ammoniak abgespalten wird. Dadurch eignen sie sich insbesondere zur Beschichtung von Zementen. Die Silazane (A-7) werden bevorzugt in einem Gewichtsanteil von etwa 0,15 bis 5 Gew.% eingesetzt, jeweils in Bezug auf das Gewicht des Bindemittels.

Für die Polysiloxane (A-8), die mindestens eine SiH-Bindung enthalten, gilt entsprechendes. Als Beispiele für (A-8) lassen sich Polymethylhydrosiloxane anführen.
(A-9) bezeichnet Titanverbindungen (Titanate) des Typs TiY¹Y²Y³Y⁴
wobei die Y¹, Y², Y³ und Y⁴ gleich oder verschieden sind und ausgewählt sind aus gesättigten oder ungesättigten Kohlenwasserstoffgruppen mit 1-30 Kohlenstoffatomen, gesättigten oder ungesättigten Carbonsäuregruppen, C₁-C₃₀-Alkoxygruppen und di-(C₁-C₃₀-Alkyl)phosphatgruppen. Beispielhaft für geeignete Verbindungen sind Isopropyltriisostearyltitanat, Alkoxytriacryltitanat und Isopropyltri(dioctylphosphat)titanat.

Ähnlich wie die Organosiliciumverbindungen können auch die Titanate mit den Silikat- oder Aluminatoberflächen zementärer Systeme kovalente Bindungen eingehen und eignen sich daher insbesondere zur Beschichtung von Portland- oder Tonerde-Zement. Dabei können die Titanate alleine oder auch in Abmischungen mit aliphatischen Mineralölen, Lösungsmittelgemischen sowie den beschriebenen Fettaminen und deren Derivaten in Kombination, in geeigneter Form auf das Bindemittelsystem aufgebracht werden.

### Optionale Verbindungen (B-1) bis (B-5)

Erfindungsgemäß kann das Beschichtungsmittel auch eine oder mehrere weitere Verbindungen (B-1) bis (B-5) umfassen. Diese können entweder in Mischung mit den Verbindungen aus (A-1) bis (A-9) und/oder in einem weiteren Schritt einzeln oder in Mischungen untereinander aufgetragen werden, bevorzugterweise nachdem mindestens eine Verbindung aus (A-1) bis (A-9) aufgetragen worden ist. Typischerweise beträgt der Anteil dieser Verbindungen (B-1) bis (B-5) 0,15 bis 7 Gew.% in Bezug auf das Bindemittel.

Bei (B-1) handelt es sich um weitere Fettsäuren außer den bereits unter (A-4) erfassten Kombinationen. Als Beispiele lassen sich Myristinsäure, Palmitinsäure, Stearinsäure oder Ölsäure anführen, wobei Ölsäure bevorzugt ist. Insbesondere bevorzugt werden diese Fettsäuren in Mischung mit den Aminen (A-1) oder (A-2) eingesetzt, die dadurch teilweise oder vollständig in Fettsäuresalze überführt werden, wie oben ausgeführt. Besonders günstig sind dabei Kombinationen, etwa aus primären Fettaminen und Ölsäure, im Verhältnis von 3:1 bis 1:3.

Weiterhin können auch Fettsäureester (B-2) eingesetzt werden, insbesondere Triglyceride wie z.B. pflanzliche Öle wie Kokosöl, Leinöl oder Palmöl oder Wachse wie z.B. Carnaubawachs. Optional kann auch ein Mineralöl (B-3), beispielsweise ein paraffinisches oder naphtenisches technisches Weißöl hinzugefügt werden, oder ein Silikonöl (B-4).

(B-2), (B-3) und (B-4) stellen hydrophobe Komponenten dar, die bevorzugt nach dem Auftragen mindestens einer Verbindung aus (A-1) bis (A-9) in einem eigenen Schritt aufgetragen werden. Der Anteil dieser hydrophoben Komponenten (B-2), (B-3) und/oder (B-4) beträgt dabei typischerweise insgesamt etwa 0,5 bis 2 Gew.%, in Bezug auf das Gewicht des Bindemittels.

Weitere optionale Komponenten sind (B-5) Fettalkohole, wobei sich stellvertretend Laurylalkohol, Myristylalkohol, Palmitylalkohol, Stearylalkohol oder Oleylalkohol anführen lassen. Die Verbindungen (B-5) werden dabei vorzugsweise in einer Menge von 0,5 bis 4 Gew.%, in Bezug auf das Gewicht des Bindemittels, eingesetzt.

### Beschichtungsverfahren

Das erfindungsgemäß beschichtete hydraulische Bindemittel ist durch Auftragen eines Beschichtungsmittels, das eine oder mehrere Verbindungen aus (A-1) bis (A-9) sowie optional eine oder mehrere Verbindungen aus (B-1) bis (B-5) umfasst, auf das hydraulische Bindemittel erhältlich. Die Verbindungen können dabei einzeln und/oder in Mischung aus zwei oder mehreren aufgetragen werden.

Das Auftragen dieser Verbindungen kann in einem Mischaggregat erfolgen. Als Mischaggregat können beispielsweise trogförmige Pulvermischer (z.B. solche der Firma Drais mit optimiertem Propellerwerkzeug) oder Intensivmischer eingesetzt werden.

Um eine für die erfindungsgemäße Wasserstabilisierung möglichst homogene und vollständige Beschichtung zu erreichen, ist das Bindemittel pulverförmig und wird im Mischaggregat vorgelegt.

Das Beschichtungsmittel bzw. einzelne Komponenten hiervon werden im flüssigen Zustand bei einer Temperatur zwischen Raumtemperatur und 160°C aufgedüst, wobei die Wahl der Temperatur von den verwendeten Verbindungen abhängt. Beim Auftragen der Komponenten des Beschichtungsmittels in mehreren Schritten kann dementsprechend jeder Schritt auch bei einer anderen Temperatur durchgeführt werden. Die für einen Schritt benötigte Zeit beträgt typischerweise 1 bis 45 Minuten.

Falls mehrere Verbindungen und/oder deren Mischungen hintereinander aufgetragen werden sollen, so wird das Silan und/oder Titanat ((A-6), (A-7), (A-8) und/oder (A-9)), falls vorhanden, bevorzugt als erstes aufgetragen, was üblicherweise bei hoher Temperatur erfolgt (abhängig vom Silan/Titanat, typischerweise 60°C oder mehr, z.B. 80°C). Danach kann zum Beispiel ein Amin oder dessen Salz, beispielsweise in Form einer Amin-Fettsäure-Mischung bei Raumtemperatur aufgetragen werden, oder aber eine Fettsäuremischung oder ein Fettsäuresalz bei einer entsprechend erhöhten Temperatur, die je nach Erweichungsbereich beispielsweise 80°C betragen kann.

### Wässrige Suspension des beschichteten Bindemittels

Wie oben ausgeführt, ist das erfindungsgemäße beschichtete hydraulische Bindemittel je nach Wahl des Beschichtungsmittels typischerweise für eine Stabilitätsdauer größer einer Stunde, über mehrere Tage bis hin zu mehreren Jahren in wässriger Suspension stabil, ohne abzubinden.

Nach dieser von Bindemittel und Beschichtungsmittel abhängigen Stabilitätsdauer hydratisiert die Suspension, was auf die allmähliche Bildung von Störstellen in der Beschichtung zurückgeführt wird. Die hydraulische Reaktion läuft dann im Wesentlichen genauso schnell ab wie beim unbeschichteten Bindemittel.

### Aktivatorfreie Ausführungsform

Dieses Verhalten lässt sich erfindungsgemäß ausnützen, um hydraulische Bindemittelsuspensionen mit definiertem Startzeitpunkt der Hydratation herzustellen. Bei dieser Ausführungsform der Erfindung wird in der Praxis eine kürzere Stabilitätsdauer bevorzugt.

Die aktivatorfreie Ausführungsform wird bevorzugterweise mit Zementen realisiert, insbesondere Tonerde-Zemente wie Ternal RG, Secar oder Fondue, die mit einem Beschichtungsmittel, das ein oder mehrere Silane/Titanate des Typs (A-6) bis (A-9), insbesondere (A-6) umfasst, beschichtet sind.

Der Anteil der Verbindungen des Typs (A-6) bis (A-9) beträgt dabei typischerweise 0.1 bis 5 % in Bezug auf das Gewicht des Bindemittels, wobei höhere Anteile eine längere Stabilitätsdauer bewirken. Die Stabilitätsdauer lässt sich durch ein zweites Additiv, beispielsweise aus (B-3) bis (B-5) verlängern.

Die Erfinder haben in diesem Zusammenhang festgestellt, dass sich bei derartigen Systemen die Stabilitätsdauer auch nach Wasserzugabe mit Hilfe der Sulfatkonzentration in der wässrigen Suspension steuern lässt. Hierzu wird der erfindungsgemäß in obiger Weise beschichtete Zement in Verbindung mit einem Sulfatspender eingesetzt.

Ein Beispiel hierfür ist die Kombination aus erfindungsgemäß beschichtetem Tonerde-Zement und Portland Zement, wobei der Portland-Zement nach Wasserzugabe als Sulfatspender dient.

Bei beschichtetem Portland-Zement kann der Sulfatspender Anhydrit (sehr langsam löslich), Gips (Dihydrat, langsam löslich), Halbhydrat (schnell löslich) oder Arkanit ((K,Na)₂SO₄, sehr schnell löslich) sein.

Eine Erhöhung der Sulfatkonzentration bewirkt eine Verlängerung der Stabilitätsdauer. So lässt bei dieser Ausführungsform sich für ein gegebenes erfindungsgemäß beschichtetes Bindemittel durch die Art des Sulfatspenders im Portland-Zement oder durch Sulfat-Zugabe über die Sulfatkonzentration ein breites Spektrum für die Stabilitätsdauer einstellen.

Dabei ist wiederum zu betonen, dass für die erfindungsgemäßen Bindemittel-Systeme im eingestellten Zeitintervall keinerlei hydraulische Reaktion nachweisbar ist. Danach reagieren sie aber mit etwa der gleichen Systematik mit Wasser wie die unbehandelten Bindemittel reagieren. Somit wird im Gegensatz zu bekannten, abbinde-verzögerten Bindemittelsystemen nicht die hydraulische Reaktion selbst verlangsamt, sondern stattdessen eine Stabilitätsdauer vom Wasserkontakt bis zum Eintreten der hydraulischen Reaktion geschaffen.

Die aktivatorfreie Ausführungsform der Erfindung ist insbesondere für relativ kurze, aber präzise einstellbare Stabilitätsintervalle von Interesse.

### Zweikomponentensysteme

Erfindungsgemäß lassen sich auch Systeme mit sehr langen Stabilitätsdauern herstellen, die in wässriger Suspension nicht nur bis zu mehreren Stunden, sondern auch über Tage bis zu mehreren Jahren stabil sind, ohne abzubinden.

Bei solchen Systemen lässt sich die Stabilitätsdauer durch Zugabe einer weiteren Komponente, eines Aktivators, beenden und die hydraulische Reaktion einleiten. Unter Einwirkung des Aktivators, der typischerweise in einem Anteil von 2 bis 15 Gew.% in Bezug auf das beschichtete hydraulische Bindemittel zugegeben wird, beginnt sich die Beschichtung abzulösen.

Danach tritt, je nach Typ und Konzentration des Aktivators, die hydraulische Reaktion quasi sofort oder nach einer gewissen Latenzzeit ein. Diese Latenzzeit bis zum Eintreten der Reaktion wird auf eine vom Aktivator abhängige, unterschiedliche Geschwindigkeit bei der Zersetzung der wasserabweisenden Oberflächenschicht zurückgeführt.

Nach Verstreichen der Latenzzeit beginnt die hydraulische Reaktion, die dann im Wesentlichen genauso schnell abläuft wie beim unbeschichteten Bindemittel. Das Eintreten der hydraulischen Reaktion kann beispielsweise kalorimetrisch anhand der Wärmeentwicklung nachgewiesen werden. Weiterhin kann die Erstarrung des Bindemittels, die mit der hydraulischen Reaktion einhergeht, mit einem Vicat-Gerät in Anlehnung an DIN EN 196-3 gemessen werden.

Aktivatoren gemäß der Erfindung werden aus Calciumhydroxid, Calciumoxid, Calciumsulfat mit und ohne Kristallwasser, Eisenchlorid, Eisensulfat mit unterschiedlichen Wassergehalten, Lithiumhydroxid, Titanoxysulfat, Zinkoxid oder Zinnchlorid ausgewählt.

Die Wahl der bevorzugten Aktivatoren sowie deren Konzentration hängen vom Typ des Bindemittels und der Beschichtung ab. Im Fall von Portland-Zement und/oder Tonerde-Zement sind insbesondere Eisenchlorid, Lithiumhydroxid oder auch Calciumoxid oder -hydroxid bevorzugt. Bei Anhydrit oder Halbhydrat sind SnCl₂, TiOSO₄, FeCl₃, FeSO₄, oder auch ZnO bevorzugt.

### Beispiele

Die Erfindung wird nun anhand von Beispielen mit Zweikomponentensystemen mit Aktivator illustriert. Eine relevante Kenngröße ist dabei zunächst die Stabilitätsdauer, die als Zeitintervall vom Ansetzen der wässrigen Suspension bis zum Einsetzen einer hydraulischen Reaktion in Abwesenheit des Aktivators ermittelt wird.

Nachdem zur wässrigen Suspension der Aktivator hinzugegeben wurde, sind weiterhin die Zeitintervalle von der Aktivatorzugabe bis zum Erstarrungsbeginn (Latenzzeit) sowie die Zeit von der Aktivatorzugabe bis zum Erstarrungsende relevant.

Diese Zeitintervalle werden in den Beispielen durch Beobachtung des Erstarrungsverlaufs mit einem Vicatgerät nach DIN EN 196-3 bestimmt. Dabei wird die Eindringtiefe einer Nadel in das erstarrende Bindemittel gemessen.

Erstarrungsbeginn ist die Zeitspanne, die vom Ansetzen des Bindemittels mit Wasser bzw. vom Zeitpunkt der Aktivatorzugabe, bis zu dem Zeitpunkt vergeht, an dem die Eindringtiefe der Nadel kürzer wird. Der Erstarrungsbeginn wird auf 5 min. gerundet angegeben.

Erstarrungsende ist die Zeitspanne, die vom Ansetzen des Bindemittels mit Wasser bzw. vom Zeitpunkt der Aktivatorzugabe bis zu dem Zeitpunkt vergeht, an dem die Nadel nur noch ca. 0,5 mm in die erhärtende Masse eindringt. Das Erstarrungsende ist durch Wiederholen der Prüfung an zwei anderen Stellen zu bestätigen und auf 15 min. gerundet anzugeben.

### Beispiel 1 Portlandzement (PZ)

In einen Mischer der Firma Lödige Typ L10 werden 5 kg Portlandzement CEM 1 52,5 vorgelegt und mit 200 g Zinkstearat während einer Mischzeit von 20 Minuten bei einer Temperatur von über 80°C intensiv gemischt. Danach erfolgt in einem zweiten Mischprozess die Zugabe von 100 g Ölsäure, nach weiteren 20 Minuten Mischzeit wird die auf diese Weise modifizierte Pulvermischung aus dem Mischer ausgetragen.

Zur Austestung der Qualität des Coatings wird anschließend die auf Raumtemperatur abgekühlte Mischung mit 5 Gew.-Teilen Wasser auf 10 Gew. Teilen Pulvermischung (WZ-Wert von 0,5), als Zementpaste angesetzt. Die so zubereitete Paste weist eine Stabilitätsdauer von 2-3 Tagen auf.

Nach Herstellung der Paste wird ein Teil davon entnommen und mit 10 Gew.% Eisenchlorid als Aktivator versetzt, wobei Paste und Aktivator innig miteinander vermischt werden. Die Erstarrungsreaktion beginnt nach ca. 3 Stunden ab Aktivatorzugabe und endet nach ca. 6 Stunden ab Aktivatorzugabe, wie sich am Vicatgerät beobachten lässt.

### Beispiel 2 - Tonerdeschmelzzement (TZ)

In den auf über 80°C vorgeheizten Mischer der Firma Lödige Typ L10 werden 5 kg Tonerdeschmelzzement eingefüllt und mit einer Eindüsvorrichtung 150 g Hexadecyltrimethoxysilan zudosiert und homogen verteilt. Nach einer Mischzeit von 20 Minuten wird die Pulvermischung aus dem Mischersystem ausgetragen.

Zur Austestung der Qualität des Coatings wird anschließend die auf Raumtemperatur abgekühlte Mischung mit 5 Gew.-Teilen Wasser auf 10 Gew. Teilen Pulvermischung (WZ-Wert von 0,5), als Zementpaste angesetzt. Die so zubereitete Paste weist eine Stabilitätsdauer von über 10 Tagen auf.

Nach Herstellung der Paste wird ein Teil davon entnommen und mit 10 Gew.% Eisenchlorid als Aktivator versetzt, wobei Paste und Aktivator innig miteinander vermischt werden. An einem Vicatgerät kann beobachtet werden, dass die Erstarrung nach ca. 7 h einsetzt und nach insgesamt ca. 11 h die Zementpaste fest ist.

### Beispiel 3 - Halbhydrat

In einen Mischer der Firma Lödige Typ L10 werden 3 kg Halbhydrat eingefüllt und mit 150 g Zinkoleat beschichtet. Die Pulvermischung wird über einen Zeitraum von 20 Minuten mit über 80°C homogen gemischt und anschließend ausgetragen. Zur Austestung der Qualität des Coatings wird anschließend die auf Raumtemperatur abgekühlte Mischung mit 5 Gew.-Teilen Wasser auf 10 Gew. Teilen Pulvermischung (WZ-Wert von 0,5), angesetzt. Die so zubereitete Paste weist eine Stabilitätsdauer von etwa 3 Wochen auf.

Nach Herstellung der Paste wird ein Teil entnommen und mit 5 Gew.% Eisensulfat als Aktivator versetzt. Die Erstarrungsreaktion setzt nach etwa 1 - 2 h ein und das Erstarrungsende ist nach ca. 2 - 3 h am Vicatgerät zu beobachten.

## Patentansprüche

1. Hydraulisches Bindemittel mit einer gleichmäßigen und vollständigen Beschichtung, erhältlich durch Aufbringen eines Beschichtungsmittels, das eine oder mehrere Verbindungen aus der Gruppe (A-1) bis (A-9) umfasst, auf ein hydraulisches Bindemittel, das aus Zementen und Calciumsulfat-Bindemitteln ausgewählt ist, wobei das hydraulische Bindemittel in Pulverform im Mischaggregat vorgelegt wird und das Beschichtungsmittel im flüssigen Zustand bei einer Temperatur zwischen Raumtemperatur und 160°C aufgedüst wird, wobei die Wahl der Temperatur von den verwendeten Verbindungen abhängt:
(A-1) Amine NR¹R²R³, wobei R¹ eine C₆-₄₀-Kohlenwasserstoffgruppe ist und R² und R³ unabhängig voneinander Wasserstoff oder eine C₁₋₄₀-Kohlenwasserstoffgruppe sind, und/oder deren Salze;
(A-2) Polyamine R¹-[NH-CH₂-CH₂-CH₂)ₙ-NH₂ mit n=1-5 und/oder deren Salze, wobei R¹ wie oben definiert ist;
(A-3) Quaternäre Ammoniumsalze [NR¹R²R³R⁴]⁺Xⁿ⁻_{1/n} wobei R¹, R² und R³ wie oben definiert sind, R⁴ eine C₁₋₆-Alkylgruppe und Xⁿ⁻ ein Anion ist;
(A-4) Fettsäuresalze mehrwertiger Metallionen;
(A-5) Fettsäuremischungen, die mindestens eine gesättigte und eine ungesättigte Fettsäure und/oder deren Salze enthalten.
(A-6) Silane des Typs (R⁵O)₃Si-R⁶ wobei R⁵ eine C₁₋₆-Alkylgruppe und R⁶ eine C₄₋₃₀-Kohlenwasserstoffgruppe oder eine Gruppe der Formel -(CH₂)ₙ-Y mit n=0-3 ist, worin Y für eine Methacrylgruppe oder eine Vinylgruppe steht, oder, falls R⁶ -(CH₂)ₙ-Y ist, auch Oligomere des Silans;
(A-7) Silazane des Typs R⁷₃Si-NH-SiR⁷₃, wobei R⁷ eine C₁₋₆-Alkylgruppe ist;
(A-8) Polysiloxane, die mindestens eine SiH-Bindung enthalten.
(A-9) Titanverbindungen TiY¹Y²Y³Y⁴, wobei die Y¹, Y², Y³ und Y⁴ gleich oder verschieden sind und ausgewählt sind aus gesättigten oder ungesättigten Kohlenwasserstoffgruppen mit 1-30 Kohlenstoffatomen, gesättigten oder ungesättigten Carbonsäuregruppen, C₁-C₃₀-Alkoxygruppen und di-(C₁-C₃₀-Alkyl)phosphatgruppen.

2. Beschichtetes hydraulisches Bindemittel nach Anspruch 1, wobei das Beschichtungsmittel zusätzlich eine oder mehrere Verbindungen aus der Gruppe (B-1) bis (B-5) umfasst:
(B-1) Fettsäuren;
(B-2) Fettsäure-Ester;
(B-3) Mineralöl;
(B-4) Silikonöl;
(B-5) Fettalkohole.

3. Beschichtetes hydraulisches Bindemittel nach Anspruch 1 oder 2, wobei der Gewichtsanteil der Beschichtungsmittel-Komponenten (A-1) bis (A-9) insgesamt 0.15-8.0% in Bezug auf das Gewicht des Bindemittels ist.

4. Beschichtetes hydraulisches Bindemittel nach mindestens einem der Ansprüche 1 bis 3, wobei (A-1) für ein primäres Fettamin und/oder dessen Salz mit einer Mineralsäure oder Carbonsäure steht.

5. Beschichtetes hydraulisches Bindemittel nach mindestens einem der Ansprüche 1 bis 4, wobei das Salz in (A-1) ein Fettsäure-Salz ist.

6. Beschichtetes hydraulisches Bindemittel nach mindestens einem der Ansprüche 1 bis 5, wobei (A-4) Zinkoleat ist.

7. Beschichtetes hydraulisches Bindemittel nach mindestens einem der Ansprüche 1 bis 6, wobei die ungesättigte Fettsäure in (A-5) Ölsäure ist.

8. Beschichtetes hydraulisches Bindemittel nach mindestens einem der Ansprüche 1 bis 7, wobei in (A-6) R⁵ eine Methyl- oder Ethylgruppe ist und R⁶ für eine lineare C₈₋₁₆-Alkylgruppe steht.

9. Beschichtetes hydraulisches Bindemittel nach mindestens einem der Ansprüche 1 bis 8, wobei das Bindemittel Portland-Zement oder Tonerde-Zement ist und das Beschichtungsmittel mindestens eine Verbindung aus (A-6), (A-7), (A-8) und (A-9) umfasst.

10. Wässrige Suspension des beschichteten hydraulischen Bindemittels nach einem der Ansprüche 1 bis 9.

11. Zweikomponentensystem aus dem beschichteten hydraulischen Bindemittel nach einem der Ansprüche 1 bis 9 oder dessen wässriger Suspension als Komponente (I) und einem Aktivator als Komponente (II), wobei die hydraulische Reaktion durch Vereinigung der Komponenten (I) und (II) auslösbar ist, und wobei der Aktivator ausgewählt ist aus Calciumhydroxid, Calciumoxid, Calciumsulfat mit und ohne Kristallwasser, Eisenchlorid, Eisensulfat mit unterschiedlichen Wassergehalten, Lithiumhydroxid, Titanoxisulfat, Zinkoxid und Zinkchlorid.

12. Zweikomponentensystem nach Anspruch 11, wobei das hydraulische Bindemittel in Komponente (I) Portland-Zement und/oder Tonerde-Zement ist, und der Aktivator (II) FeCl₃ ist.

13. Zweikomponentensystem nach Anspruch 11, wobei das hydraulische Bindemittel in Komponente (I) Anhydrid und/oder Halbhydrat ist, und der Aktivator (II) mindestens eine Verbindung aus FeCl₃, FeSO₄ und/oder ZnO ist.

14. Zweikomponentensystem nach einem der Ansprüche 11 bis 13, wobei Komponente (II) zu 2 bis 15 Gew.% in Bezug auf das Gewicht des beschichteten hydraulischen Bindemittels vorliegt.

## Claims

1. Hydraulic binder having an even and complete coating, which can be obtained by applying a coating agent, which comprises one or more compounds from the group (A-1) to (A-9), to a hydraulic binder which is selected from cements and calcium sulphate binders, wherein the hydraulic binder is presented in the mixing unit in powder form and the coating agent is sprayed in the liquid state at a temperature between room temperature and 160°C, wherein the choice of temperature depends on the compounds used:
(A-1) amines NR¹R²R³, wherein R¹ is a C₆₋₄₀ hydrocarbon group and R² and R³ independently of one another are hydrogen or a C₁₋₄₀ hydrocarbon group, and/or salts thereof;
(A-2) polyamines R¹-[NH-CH₂-CH₂-CH₂]ₙ-NH₂ where n=1-5 and/or salts thereof, wherein R¹ is as defined above;
(A-3) quaternary ammonium salts [NR¹R²R³R⁴]⁺Xⁿ⁻_{1/n}, wherein R¹, R² and R³ are as defined above, R⁴ is a C₁-₆ alkyl group and Xⁿ⁻ is an anion;
(A-4) fatty acid salts of multivalent metal ions;
(A-5) fatty acid mixtures which contain at least one saturated and one unsaturated fatty acid and/or salts thereof.
(A-6) silanes of the type (R⁵O)₃Si-R⁶, wherein R⁵ is a C₁₋₆ alkyl group and R⁶ is a C₄₋₃₀ hydrocarbon group or a group of the formula -(CH₂)ₙ-Y where n=0-3, wherein Y represents a methacrylic group or a vinyl group, or, if R⁶ is -(CH₂)ₙ-Y, also oligomers of the silane;
(A-7) silazanes of the type R⁷₃Si-NH-SiR⁷₃, wherein R⁷ is a C₁₋₆ alkyl group;
(A-8) polysiloxanes which contain at least one SiH bond.
(A-9) titanium compounds TiY¹Y²Y³Y⁴, wherein the Y¹, Y², Y³ and Y⁴ are the same or different and are selected from saturated or unsaturated hydrocarbon groups having 1-30 carbon atoms, saturated or unsaturated carboxylic acid groups, C₁-C₃₀ alkoxy groups and di-(C₁-C₃₀ alkyl) phosphate groups.

2. Coated hydraulic binder according to claim 1, wherein the coating agent additionally comprises one or more compounds from the group (B-1) to (B-5):
(B-1) fatty acids;
(B-2) fatty acid esters;
(B-3) mineral oil;
(B-4) silicone oil;
(B-5) fatty alcohols.

3. Coated hydraulic binder according to claim 1 or 2, wherein the weight proportion of coating agent components (A-1) to (A-9) is in total 0.15-8.0% with respect to the weight of the binder.

4. Coated hydraulic binder according to at least one of claims 1 to 3, wherein (A-1) represents a primary fatty amine and/or salt thereof with a mineral acid or carboxylic acid.

5. Coated hydraulic binder according to at least one of claims 1 to 4, wherein the salt in (A-1) is a fatty acid salt.

6. Coated hydraulic binder according to at least one of claims 1 to 5, wherein (A-4) is zinc oleate.

7. Coated hydraulic binder according to at least one of claims 1 to 6, wherein the unsaturated fatty acid in (A-5) is oleic acid.

8. Coated hydraulic binder according to at least one of claims 1 to 7, wherein in (A-6) R⁵ is a methyl group or ethyl group and R⁶ represents a linear C₈₋₁₆ alkyl group.

9. Coated hydraulic binder according to at least one of claims 1 to 8, wherein the binder is Portland cement or aluminous cement and the coating agent comprises at least one compound from (A-6), (A-7), (A-8) and (A-9).

10. Aqueous suspension of the coated hydraulic binder according to one of claims 1 to 9.

11. Two-component system comprising the coated hydraulic binder according to one of claims 1 to 9 or aqueous suspension thereof as component (I) and an activator as component (II), wherein the hydraulic reaction can be triggered by combining components (I) and (II), and wherein the activator is selected from calcium hydroxide, calcium oxide, calcium sulphate with and without water of crystallisation, iron chloride, iron sulphate with different water contents, lithium hydroxide, titanium oxysulphate, zinc oxide and zinc chloride.

12. Two-component system according to claim 11, wherein the hydraulic binder in component (I) is Portland cement and/or aluminous cement, and the activator (II) is FeCl₃.

13. Two-component system according to claim 11, wherein the hydraulic binder in component (I) is anhydride and/or semi-hydrate, and the activator (II) is at least one compound from FeCl₃, FeSO₄ and/or ZnO.

14. Two-component system according to one of claims 11 to 13, wherein 2 to 15 wt.% of component (II) is present with respect to the weight of the coated hydraulic binder.

## Revendications

1. Liant hydraulique avec un revêtement régulier et complet, pouvant être obtenu par dépôt d'un agent de revêtement qui comprend un ou plusieurs composés du groupe (A-1) à (A-9), sur un liant hydraulique, qui est choisi parmi les ciments et les liants au sulfate de calcium, le liant hydraulique étant placé dans le groupe mélangeur sous forme de poudre et l'agent de revêtement à l'état liquide étant pulvérisé à une température située entre la température ambiante et 160 °C, la sélection de la température dépendant des composés utilisés :
(A-1) amines NR¹R²R³, dans lesquelles R¹ est un groupe hydrocarbure en C₆₋₄₀ et R² et R³, indépendamment l'un de l'autre, est un hydrogène ou un groupe hydrocarbure en C₁₋₄₀, et/ou leurs sels ;
(A-2) polyamides R¹-(NH-CH₂-CH₂-CH₂)ₙ-NH₂ avec n=1-5 et/ou leurs sels, dans lesquels R¹ est tel que défini ci-dessus ;
(A-3) sels d'ammonium quaternaire (NR¹R²R³R⁴) ⁺Xⁿ⁻_{1/n}, dans lesquels R¹, R² et R³ sont tels que définis ci-dessus, R⁴ est un groupe alkyle en C₁₋₆ et Xⁿ⁻ est un anion ;
(A-4) sels d'acide gras d'ions métalliques polyvalents ;
(A-5) mélanges d'acide gras contenant au moins un acide gras saturé et un acide gras insaturé et/ou leurs sels ;
(A-6) silanes de type (R⁵O)₃Si-R⁶, dans lesquels R⁵ est un groupe alkyle en C₁₋₆ et R⁶ est un groupe hydrocarbure en C₄₋₃₀ ou un groupe de formule -(CH₂)ₙ-Y avec n=0-3, dans laquelle Y représente un groupe méthacrylique ou un groupe vinylique, ou bien, au cas où R⁶ est -(CH₂)ₙ-Y, représente également des oligomères de silane ;
(A-7) silazanes de type R⁷₃Si-NH-SiR⁷₃, dans lesquels R⁷ représente un groupe alkyle en C₁₋₆ ;
(A-8) polysiloxanes comprenant au moins une liaison SiH ;
(A-9) composés de titane TiY¹Y²Y³Y⁴, dans lesquelles Y¹, Y², Y³ et Y⁴ sont identiques ou différents et sont choisis parmi les groupes hydrocarbures saturés ou insaturés ayant de 1 à 30 atomes de carbone, les groupes acide carboxylique saturés ou insaturés, les groupes alcoxy en C₁-C₃₀ et les groupes di-(alkyle en C₁-C₃₀) phosphate.

2. Liant hydraulique revêtu selon la revendication 1, dans lequel l'agent de revêtement comprend en plus un ou plusieurs composés choisis dans le groupe (B-1) à (B-5) :
(B-1) acides gras ;
(B-2) esters d'acides gras ;
(B-3) huile minérale ;
(B-4) huile siliconée ;
(B-5) alcools gras.

3. Liant hydraulique revêtu selon la revendication 1 ou 2, dans lequel la proportion en poids des composants (A-1) à (A-9) de l'agent de revêtement est au total de 0,15 à 8,0 % par rapport au poids du liant.

4. Liant hydraulique revêtu selon au moins une des revendications 1 à 3, dans lequel (A-1) représente une amine grasse primaire et/ou son sel avec un acide minéral ou un acide carboxylique.

5. Liant hydraulique revêtu selon au moins une des revendications 1 à 4, dans lequel le sel du (A-1) est un sel d'acide gras.

6. Liant hydraulique revêtu selon au moins une des revendications 1 à 5, dans lequel (A-4) est l'oléate de zinc.

7. Liant hydraulique revêtu selon au moins une des revendications 1 à 6, dans lequel l'acide gras insaturé du (A-5) est l'acide oléique.

8. Liant hydraulique revêtu selon au moins une des revendications 1 à 7, dans lequel, dans (A-6), R⁵ est un groupe méthyle ou éthyle et R⁶ représente un groupe alkyle en C₈₋₁₆ linéaire.

9. Liant hydraulique revêtu selon au moins une des revendications 1 à 8, le liant étant un ciment de Portland ou un ciment argileux et le liant comprenant au moins un composé parmi (A-6), (A-7), (A-8) et (A-9).

10. Suspension aqueuse du liant hydraulique revêtu selon une des revendications 1 à 9.

11. Système bicomposant constitué du liant hydraulique revêtu selon une des revendications 1 à 9 ou de sa suspension aqueuse comme composant (I) et d'un activateur comme composant (II), la réaction hydraulique pouvant être déclenchée par réunion des composants (I) et (II), et l'activateur étant choisi parmi l'hydroxyde de calcium, l'oxyde de calcium, le sulfate de calcium avec ou sans eau cristalline, le chlorure de fer, le sulfate de fer ayant différentes teneurs en eau, l'hydroxyde de lithium, l'oxysulfate de titane, l'oxyde de zinc et le chlorure de zinc.

12. Système bicomposant selon la revendication 11, le liant hydraulique dans le composant (I) étant un ciment de Portland et/ou un ciment argileux, et l'activateur (II) étant FeCl₃.

13. Système bicomposant selon la revendication 11, le liant hydraulique dans le composant (I) étant un anhydride et/ou un hémihydrate, et l'activateur (II) étant au moins un composé parmi FeCl₃, FeSO₄ et/ou ZnO.

14. Système bicomposant selon une des revendications 11 à 13, le composant (II) étant présent à un taux de 2 à 15 % en poids par rapport au poids du liant hydraulique revêtu.
